(19) **Europäisches Patentamt**
**European Patent Office**
**Office européen des brevets**

(11) **EP 4 601 168 A1**

(12) **EUROPÄISCHE PATENTANMELDUNG**

(43) Veröffentlichungstag:
**13.08.2025 Patentblatt 2025/33**

(21) Anmeldenummer: **24156861.7**

(22) Anmeldetag: **09.02.2024**

(51) Internationale Patentklassifikation (IPC):
*H02M 1/00* (2006.01)     *H02M 5/12* (2006.01)
*H02M 7/10* (2006.01)     *B23K 9/06* (2006.01)
*H02M 7/19* (2006.01)     *H02M 7/25* (2006.01)

(52) Gemeinsame Patentklassifikation (CPC):
**H02M 1/0064; B23K 9/06; H02M 5/12; H02M 7/10;**
H02M 7/19; H02M 7/25

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Fronius International GmbH**
**4643 Pettenbach (AT)**

(72) Erfinder:
• **Zwirchmair, Claus**
**4643 Pettenbach (AT)**
• **Mühlberger, Michael**
**4643 Pettenbach (AT)**
• **Schultschik, Christoph**
**4643 Pettenbach (AT)**

(74) Vertreter: **Patentanwälte Pinter & Weiss OG**
**Prinz-Eugen-Straße 70**
**1040 Wien (AT)**

(54) **NETZTEIL MIT HILFSWICKLUNG UND MAGNETISCHEM TEILER ZUM LICHTBOGENFÜGEN**

(57)     Um ein Netzteil (1) bereitzustellen, das eine im Vergleich zum bekannten Stand der Technik präzisere Erhöhung einer Fügespannung ($U_s$) erlaubt, bei der eine für das Zünden eines Lichtbogens notwendige Mindestspannung erreicht wird, wird ein Transformator (T) mit einem zumindest dreischenkeligen magnetischen Kern vorgesehen, dessen Sekundärwicklungen ($L_{2H}$, $L_{2N1}$) durch parallele, selektiv aktivierbare Fügespannungspfade ($P_1$, $P_2$) mit den Ausgangspolen (C, D) des Netzteils (1) verbunden sind.

FIG. 3

EP 4 601 168 A1

**Beschreibung**

Die Erfindung betrifft ein Netzteil zur Bereitstellung einer zwischen einem ersten Netzteil-Ausgangspol und einem zweiten Netzteil-Ausgangspol abfallenden Fügespannung für die Durchführung eines Lichtbogenfügeverfahrens.

Aus dem Stand der Technik bekannte Netzteile zur Bereitstellung einer Fügespannung zur Durchführung eines Lichtbogenfügeverfahrens, wie insbesondere einem Lichtbogenschweißverfahren oder einem Lichtbogenlötverfahren, weisen einen eingangsseitigen Gleichrichter auf, der eine Eingangswechselspannung zu einer Zwischenkreisspannung gleichrichtet. Diese wird mittels eines Wechselrichters in eine hochfrequente Primär-Wechselspannung einer definierten Schaltfrequenz umgewandelt und über einen Transformator in eine an dessen Sekundärseite abfallende Sekundär-Wechselspannung übertragen. Die Sekundär-Wechselspannung wird durch geeignete Schaltmittel in die vorstehend genannte Fügespannung gewandelt, also in eine Schweißspannung oder Lötspannung, dabei vorzugsweise mit einem weiteren, sekundärseitigen Gleichrichter gleichgerichtet und am Ausgang als Fügestrom ausgegeben. Durch das Windungsverhältnis Primärwicklung zu Sekundärwicklung des Transformators wird die Stromstärke auf der Sekundärseite des Transformators auf die zum Fügen notwendig hohen Ströme angehoben, die beim Schweißen im Bereich mehrerer 100A liegen können. Steht bereits eine geeignete Primär-Wechselspannung zur Verfügung, kann ein Netzteil auch nur einen Transformator und die auf der Sekundärseite erforderlichen Schaltmittel zum Richten der Sekundär-Wechselspannung aufweisen, und es kann auf den primärseitigen Gleichrichter, Zwischenkreis und Wechselrichter verzichtet werden.

Übliche Schweißspannungen, als wichtiges Beispiel von allgemeinen Fügespannungen, liegen in einem Bereich zwischen 20V und 60V, was ausreichend ist, einen einmal gezündeten Lichtbogen aufrecht zu erhalten. Zum Zünden des Lichtbogens bzw. für einen stabilen Lichtbogen bei Stromstärken kleiner 20A wird aber eine höhere Spannung benötigt. Auch bei dynamischen Anforderungen des Schweißprozesses, beispielsweise durch eine veränderte Lichtbogenlänge hervorgerufen, kann eine höhere Schweißspannung einen stabileren Lichtbogen gewährleisten.

Der Stand der Technik zeigt einige Möglichkeiten zur Erreichung dieser höheren Schweißspannung auf der Sekundärseite. Beispielsweise kann dies mit bekannten Spannungsverdopplungsschaltungen oder Schaltnetzteilen erreicht werden, was aber mit zusätzlichem Bauteilaufwand verbunden ist. So ist aus der US 2004/119572 A1 bekannt, mit einer als Tertiärwicklung bezeichneten zweiten Sekundärwicklung am Transformator eine höhere Ausgangsspannung bei kleineren Strömen zu erzielen. Dabei weist die zweite Sekundärwicklung ein zur ersten Sekundärwicklung unterschiedliches Übersetzungsverhältnis sowie eine höhere Streuinduktivität auf, sodass die Spannung am Ausgang der zweiten Sekundärwicklung bei höheren Strömen einbricht. Die höhere Streuinduktivität der zweiten Sekundärwicklung ist allerdings mit hohem konstruktivem Aufwand verbunden. Außerdem ist der mit der zweiten Sekundärwicklung erzielbare Spannungsbereich, der sich aufgrund der ganzzahligen Windungszahlen erreichen lässt, sehr eingeschränkt. Die erste Sekundärwicklung hat zur Erreichung des großen Stromübersetzungsverhältnisses typischerweise eine sehr kleine Windungszahl und einen hohen Querschnitt, um die Stromdichte und somit die Wärmeentwicklung gering zu halten. Daher ist es aus konstruktiven Gründen oftmals nötig, auf eine Windungszahl der ersten Sekundärwicklung von lediglich eins zurückzugreifen. In einem solchen Fall (die Tertiärwicklung von US 2004/119572 A1 hat eine höhere Windungszahl als die erste Sekundärwicklung!) muss die zweite Sekundärwicklung bzw. Tertiärwicklung, zumindest zwei Windungen aufweisen, und hat damit die doppelte Ausgangsspannung wie die erste Sekundärwicklung. Bei einer Verdopplung der Ausgangsspannung ergibt sich jedoch die Gefahr, aufgrund von Sicherheitsvorschriften vorgegebene Höchstwerte der Ausgangsspannung zu überschreiten. Aktuell beträgt die dauerhaft zugelassene maximale Spannung am Ausgang eines Netzteils 113V DC.

Aus EP 3 376 659 A1 ist ein weiterer Ansatz zur Erhöhung einer Leerlaufspannung zum Zünden eines Lichtbogens bekannt. In dieser Schrift besteht jedoch nur geringe Flexibilität bezüglich der einstellbaren Spannungserhöhungen. Insbesondere sieht EP 3 376 659 A1 eine zweite Sekundärwicklung vor, die eine zusätzliche, wesentlich höhere Spannung bereitstellt als die von einer ersten, bereits bestehenden Sekundärwicklung bereitgestellte Spannung. Es ist folglich nicht möglich, geringe Spannungserhöhungen ohne große elektrische Verluste zu realisieren, beispielsweise Leerlaufspannungserhöhungen um den Faktor 1,6, wie dies für eine Erhöhung von zum Teil üblichen 70V DC auf zum Zünden gewünschte (gerade noch zulässige) 112V DC aber erforderlich wäre.

Auch für das Löten, als nicht minder wichtiges Fügeverfahren, gilt, dass zum Zünden von Lichtbögen temporär erhöhte Fügespannungen wünschenswert sind, wobei in gleicher Weise regulatorische Einschränkungen eingehalten werden müssen.

Der Erfindung liegt somit die Aufgabe zugrunde, ein Netzteil bereitzustellen, das eine präzisere Erhöhung der Fügespannung erlaubt, um ein sicheres Zünden des Lichtbogens mit gesetzlich erlaubten Spannungen zu gewährleisten, wobei Verluste und Aufwand für zusätzliche Bauteile geringgehalten werden sollen.

Diese Aufgabe wird durch die Merkmale der unabhängigen Ansprüche gelöst. Im erfindungsgemäßen Netzteil des unabhängigen Anspruchs 1 ist ein Transformator mit einem zumindest dreischenkeligen magnetischen Kern vorgesehen, aufweisend einen Hauptschenkel, zumindest zwei Nebenschenkel, eine Primärwicklung zur Aufnahme einer an einem Netzteil-Eingangspolpaar des Netzteils anliegenden Primär-Wechselspannung, eine Haupt-Sekundärwicklung mit einem ersten Haupt-Wicklungsanschluss und einem zweiten Haupt-Wicklungsanschluss, und zumindest eine Hilfs-Sekundärwicklung mit einem ersten Hilfs-Wicklungsanschluss und einem zweiten Hilfs-Wicklungsanschluss, wobei die Primärwicklung und die Haupt-Sekundärwicklung um den Hauptschenkel gewickelt sind und die zumindest eine Hilfs-Sekundärwicklung um einen der zumindest zwei Nebenschenkel gewickelt ist.

Erfindungsgemäß sind der erste Haupt-Wicklungsanschluss über ein erstes elektrisches Schaltmittel mit dem ersten Netzteil-Ausgangspol elektrisch verbunden, um einen ersten Fügespannungspfad zwischen dem ersten Haupt-Wicklungsanschluss und dem ersten Netzteil-Ausgangspol zu erzeugen, der zweite Haupt-Wicklungsanschluss mit dem zweiten Netzteil-Ausgangspol elektrisch verbunden, der erste Hilfs-Wicklungsanschluss über ein zweites elektrisches Schaltmittel mit dem ersten Netzteil-Ausgangspol verbunden, und der zweite Hilfs-Wicklungsanschluss elektrisch leitend mit dem ersten Haupt-Wicklungsanschluss verbunden, um einen zweiten, zum ersten Fügespannungspfad parallelen Fügespannungspfad zwischen dem ersten Haupt-Wicklungsanschluss und dem ersten Netzteil-Ausgangspol zu erzeugen. Das erste Schaltmittel und das zweite Schaltmittel sind hierbei ausgestaltet, in Abhängigkeit eines Betriebszustandes des Netzteils den ersten Fügespannungspfad oder den zweiten Fügespannungspfad oder gleichzeitig den ersten Fügespannungspfad und den zweiten Fügespannungspfad in einen elektrisch leitenden Zustand zu versetzen und damit zu aktivieren, um die von der Primärwicklung aufgenommene Primär-Wechselspannung in die Fügespannung zu wandeln.

Durch die erfindungsgemäße Anordnung der Komponenten Transformator, Schaltmittel und Wicklungen des Transformators und die gezielte Aktivierung / Begrenzung der Fügespannungspfade in Abhängigkeit eines Betriebszustandes des Netzteils (z.B. ein fließender Strom, eine Temperatur, eine übertragene Leistung usw.) wird eine Reihe vorteilhafter technischer Effekte kombiniert, sodass eine gewünschte Spannungserhöhung erreicht wird, mit der eine Mindestspannung für das Zünden erreicht wird, im niedrigen Leistungsbereich ein stabiler Lichtbogen gewährleistet ist und eine definierte maximale Spannung unterschritten bleibt. Konkret erlaubt die elektrische Verbindung des zweiten Hilfs-Wicklungsanschluss mit dem ersten Haupt-Wicklungsanschluss eine serielle Verschaltung der Haupt-Sekundärwicklung mit der zumindest eine Hilfs-Sekundärwicklung, sodass sich die in diesen Wicklungen induzierten elektrischen Spannungen addieren, was eine Spannungserhöhung erlaubt. Aufgrund der Tatsache, dass die Schaltmittel aber ausgestaltet sind, je nach Betriebszustand des Netzteils den ersten und/oder den zweiten Fügespannungspfad in einen elektrisch leitenden Zustand zu versetzen, und damit den ersten Haupt-Wicklungsanschluss und/oder den zweiten Hilfs-Wicklungsanschluss elektrisch leitend oder mit dem ersten Netzteil-Ausgangspol zu verbinden, kann je nach Betriebszustand des Netzteils entweder die Summe der an der Haupt-Sekundärwicklung und der zumindest einen Hilfs-Sekundärwicklung abfallenden Spannungen an den Netzteil-Ausgangspol C ausgegeben werden, oder es kann nur die an der Haupt-Sekundärwicklung abfallende Spannung ausgegeben werden, oder es kann eine Spannung zwischen diesen Werten ausgegeben werden. Auf diese Weise kann gezielt ausgewählt werden, wann es zu einer Spannungserhöhung kommen soll, z.B. im Leerlauf, und wann nicht, z.B. während des Schweißens.

Vorteilhafte Ausgestaltungen des erfindungsgemäßen Netzteils sind Gegenstand der abhängigen Ansprüche.

Die gegenständliche Erfindung wird nachfolgend unter Bezugnahme auf die Figuren 1 bis 5 näher erläutert, die beispielhaft, schematisch und nicht einschränkend vorteilhafte Ausgestaltungen der Erfindung zeigen. Dabei zeigt

Fig.1 ein Blockschaltbild eines primär getakteten Netzteils,

Fig.2 ein erfindungsgemäßes Netzteil mit einer Haupt-Sekundärwicklung und einer Hilfs-Sekundärwicklung,

Fig.3 ein erfindungsgemäßes Netzteil mit einer Haupt-Sekundärwicklung mit Mittelpunktanzapfung und zwei Hilfs-Sekundärwicklung,

Fig.4 Ausgestaltungen der Schaltmittel in den erfindungsgemäßen Fügespannungspfaden,

Fig.5 eine mit einem erfindungsgemäßen Netzteil erreichbare Strom-Spannungs-Kennlinie.

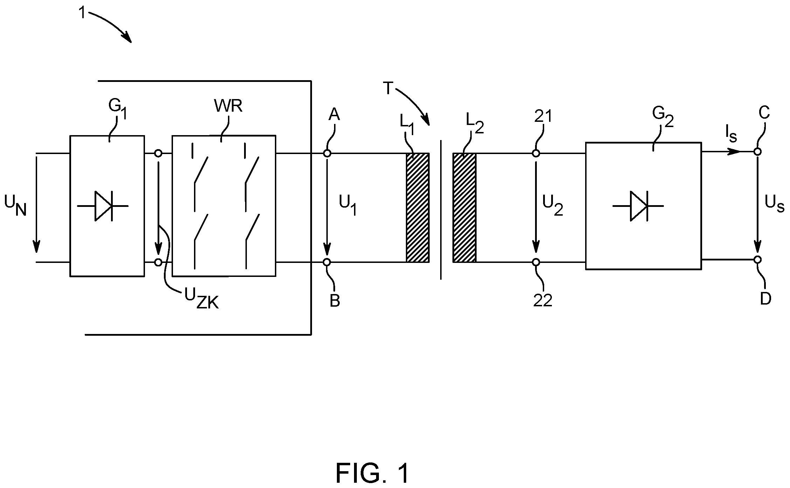

Fig. 1 zeigt ein aus dem Stand der Technik bekanntes Blockschaltbild eines primär getakteten Netzteils 1 zur Bereitstellung eines Fügestroms Is und einer Fügespannung $U_s$ für die Durchführung eines Lichtbogenfügeverfahrens, beispielsweise eines WIG-Schweißverfahrens, Stabelektrodenschweißverfahrens oder MIG/MAG Schweißverfahrens oder MIG/MAG-Lötverfahren. Im gezeigten Fall wird eine (Netz-)Eingangsspannung $U_N$ mittels eines eingangsseitigen Gleichrichters $G_1$ zu einer Zwischenkreisspannung $U_{ZK}$ gleichgerichtet. Dabei kann auch ein nicht näher beschriebenes Leistungsfaktorkorrekturfilter (PFC Power Factor Correction), oder auch ein sogenannter Booster zur Erhöhung, Glättung und/oder Stabilisierung der Zwischenkreisspannung $U_{ZK}$ eingesetzt werden. Ein nachgeschalteter Wechselrichter WR, der beispielsweise als Vollbrücke ausgeführt ist, erzeugt eine Primär-Wechselspannung $U_1$ mit einer Schaltfrequenz $f_S$, die an die Primärwicklung $L_1$ eines Transformators T angelegt wird.

Die Primär-Wechselspannung $U_1$ ist näherungsweise eine Rechteckspannung und wird durch den Transformator T abwärts auf die Sekundär-Wechselspannung $U_2$ transformiert, um gleichzeitig eine hohe Stromübersetzung und damit letztlich einen hohen Fügestrom !s erzielen zu können. Dementsprechend hat die Sekundärwicklung $L_2$ des Transformators T eine hohe Strombelastbarkeit, um Fügeströme Is, insbesondere Schweißströme Is, im Bereich einiger 100A, beispielsweise bis zu 600A bereitstellen zu können. Der Strom an der Sekundärwicklung $L_2$ des Transformators T wird, wie im Stand der Technik üblich, über einen ausgangsseitigen Gleichrichter $G_2$ gleichgerichtet und zwischen einem ersten Netzteil-Ausgangspol C und einem zweiten Netzteil-Ausgangspol D bereitgestellt. Vielfach werden im Stand der Technik am Ausgang eines Netzteils 1, d.h. am ersten Netzteil-Ausgangspol C und einem zweiten Netzteil-Ausgangspol D, zusätzlich Kapazitäten und/oder Glättungswiderstände angeordnet, um Störungen zu dämpfen.

Wie vorstehend erläutert, kann auf den primärseitigen Gleichrichter G1, den Zwischenkreis $U_{ZK}$ und den Wechselrichter WR auch verzichtet werden, wenn bereits eine geeignete Primär-Wechselspannung $U_1$ zur Verfügung steht, beispielsweise weil sich eine von einem elektrischen Netz zur Verfügung gestellte Spannung bereits als Primär-Wechselspannung $U_1$ eignet oder weil eine geeignete Primär-Wechselspannung $U_1$ von einem anderen Gerät zur Verfügung gestellt wird und so direkt übernommen und verwendet werden kann. Diese Komponenten sind für die nachfolgend erläuterte Erfindung folglich nicht zwingend erforderlich.

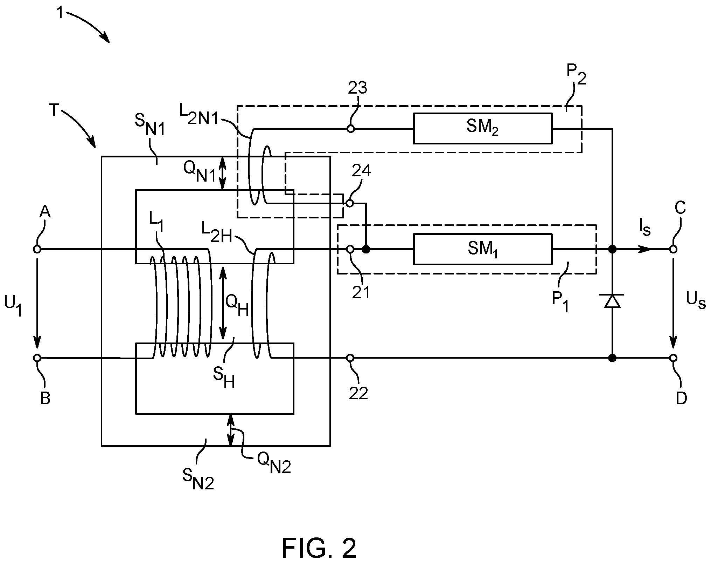

Wie eingangs ausgeführt, stellt die gezielte Erhöhung einer Fügespannung $U_S$ zu gezielten Zeitpunkten, insbesondere im Leerlauf zum Zünden bzw. im niedrigen Leistungsbereich, ein oftmaliges Problem dar, vor allem beim Lichtbogenschweißen, in gleicher Weise aber beim Lichtbogenlöten. Wie dieses Problem und folglich die vorstehend genannte Aufgabe, eine präzise Erhöhung der Fügespannung zu ermöglichen, wobei Verluste und Bauteilaufwand geringzuhalten sind, gelöst werden kann, ist nachstehend anhand von Fig.2 gezeigt.

Fig.2 zeigt ein Netzteil 1 zur Bereitstellung einer zwischen einem ersten Netzteil-Ausgangspol C und einem zweiten Netzteil-Ausgangspol D abfallenden Fügespannung $U_S$ für die Durchführung eines Lichtbogenfügeverfahrens, bei dem es sich, wie vorstehend erläutert, bevorzugt um ein Lichtbogenschweißverfahren oder um ein Lichtbogenlötverfahren handelt. Erfindungsgemäß ist im gezeigten Netzteil 1 ein Transformator T mit einem magnetischen Kern vorgesehen, welcher zumindest 3 Schenkel aufweist, einen Hauptschenkel $S_H$, und zumindest zwei Nebenschenkel $S_{N1}$, $S_{N2}$, sowie eine Primärwicklung L1 zur Aufnahme der am Netzteil-Eingangspolpaar A, B anliegenden Primär-Wechselspannung $U_1$,

eine Haupt-Sekundärwicklung $L_{2H}$ mit einem ersten Haupt-Wicklungsanschluss 21 und einem zweiten Haupt-Wicklungsanschluss 22, und eine Hilfs-Sekundärwicklung $L_{2N1}$ mit einem ersten Hilfs-Wicklungsanschluss 23 und einem zweiten Hilfs-Wicklungsanschluss 24. Die Primärwicklung $L_1$ und die Haupt-Sekundärwicklung $L_{2H}$ sind erfindungsgemäß um den Hauptschenkel $S_H$ gewickelt und die zumindest eine Hilfs-Sekundärwicklung $L_{2N1}$ ist um den ersten der zumindest zwei Nebenschenkel $S_{N1}$ gewickelt.

Im Rahmen der Erfindung ist weiters vorgesehen, dass der erste Haupt-Wicklungsanschluss 21 über ein erstes elektrisches Schaltmittel $SM_1$ mit dem ersten Netzteil-Ausgangspol C elektrisch verbunden ist, um einen ersten Fügespannungspfad $P_1$ zwischen dem ersten Haupt-Wicklungsanschluss 21 und dem ersten Netzteil-Ausgangspol C zu erzeugen. Der zweite Haupt-Wicklungsanschluss 22 ist mit dem zweiten Netzteil-Ausgangspol D elektrisch verbunden, der erste Hilfs-Wicklungsanschluss 23 ist über ein zweites elektrisches Schaltmittel $SM_2$ mit dem ersten Netzteil-Ausgangspol C verbunden, und der zweite Hilfs-Wicklungsanschluss 24 ist elektrisch leitend mit dem ersten Haupt-Wicklungsanschluss 21 verbunden, um einen zweiten, zum ersten Fügespannungspfad $P_1$ parallelen Fügespannungspfad $P_2$ zwischen dem ersten Haupt-Wicklungsanschluss 21 und dem ersten Netzteil-Ausgangspol C zu erzeugen.

Erfindungsgemäß sind das erste Schaltmittel $SM_1$ und das zweite Schaltmittel $SM_2$ ausgestaltet, in Abhängigkeit eines Betriebszustandes des Netzteils 1 den ersten und/oder den zweiten Fügespannungspfad $P_2$ in einen elektrisch leitenden Zustand zu versetzen und damit zu aktivieren, um die von der Primärwicklung $L_1$ aufgenommene Primär-Wechselspannung $U_1$ in die Fügespannung $U_S$ zu wandeln. Das bedeutet, dass im Rahmen der Erfindung in Abhängigkeit des Betriebszustandes des Netzteils 1 entweder alleine der erste Fügespannungspfad $P_1$ leitet, oder alleine der zweite Fügespannungspfad $P_2$ leitet, oder sowohl der erste Fügespannungspfad $P_1$ als auch der zweite Fügespannungspfad $P_2$ leiten, um die erzeugte Fügespannung $U_S$ geeignet zu beeinflussen, z.B. im Leerlauf zum Zünden zu erhöhen. Im Rahmen dessen kann überdies vorgesehen sein, die elektrische Leitfähigkeit eines der Fügespannungspfade $P_1$, $P_2$ in Abhängigkeit des Betriebszustandes des Netzteils 1 zu modifizieren, also z.B. zu erhöhen oder zu reduzieren. Dadurch wird es möglich, insbesondere den in einem Fügespannungspfad $P_1$, $P_2$ fließenden Strom zu begrenzen, und so unterschiedliche Wirkungen auf die erzeugte Fügespannung $U_S$ zu erzielen. Wie zur Realisierung dieser selektiven Aktivierung der genannten Fügespannungspfade $P_1$, $P_2$ vorgegangen werden kann, wird nachstehend im Detail erläutert.

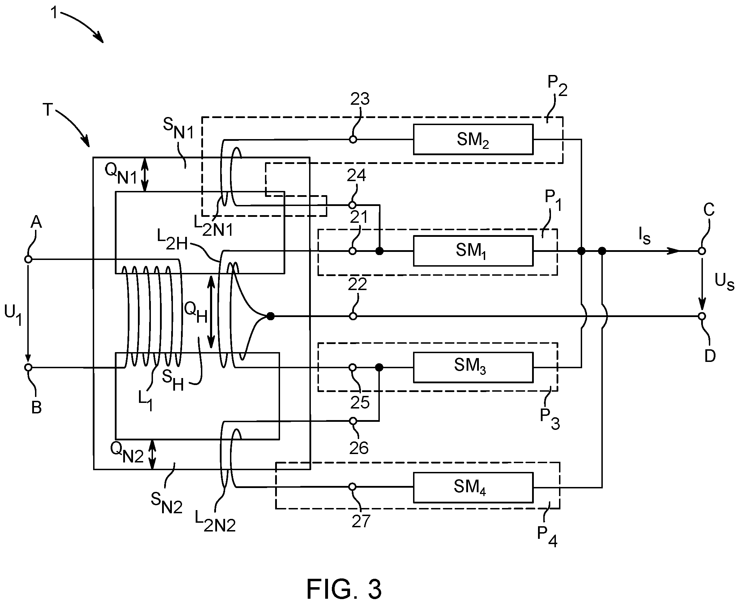

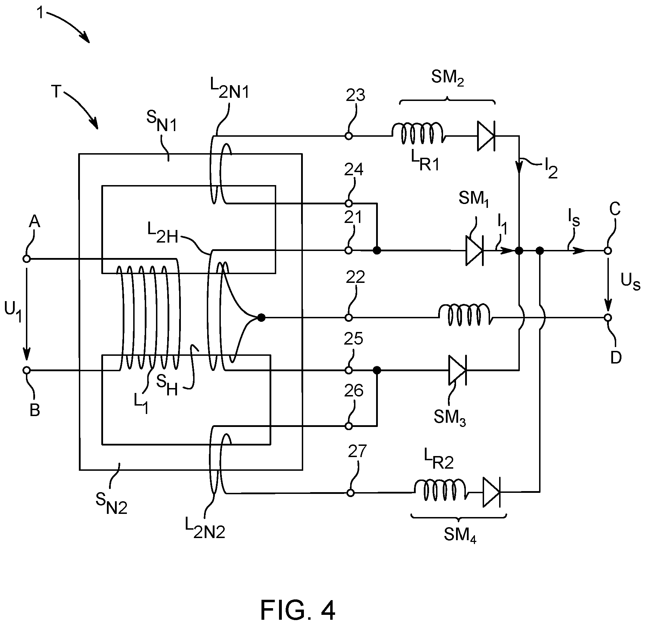

Durch die in Fig.2 gezeigte erfindungsgemäße Anordnung der Komponenten Transformator T, Schaltmittel $SM_1$, $SM_2$ und Wicklungen $L_1$, $L_{2H}$, $L_{2N1}$ und die Aktivierung / Begrenzung der Fügespannungspfade $P_1$, $P_2$ wird eine Reihe technischer Effekten vorteilhaft kombiniert, um die gewünschte Spannungserhöhung zu erreichen. Konkret erlaubt die elektrische Verbindung des zweiten Hilfs-Wicklungsanschluss 24 mit dem ersten Haupt-Wicklungsanschluss 21 eine serielle Verschaltung der Haupt-Sekundärwicklung $L_{2H}$ mit der zumindest eine Hilfs-Sekundärwicklung $L_{2N1}$, sodass sich die in diesen Wicklungen induzierten elektrischen Spannungen addieren, was eine Spannungserhöhung erlaubt. Aufgrund der Tatsache, dass die Schaltmittelt $SM_1$, $SM_2$ aber ausgestaltet sind, je nach Betriebszustand des Netzteils 1 den ersten und/oder den zweiten Fügespannungspfad $P_1$, $P_2$ in einen elektrisch leitenden Zustand zu versetzen, und damit den ersten Haupt-Wicklungsanschluss 21 und/oder den zweiten Hilfs-Wicklungsanschluss 23 elektrisch leitend oder mit dem ersten Netzteil-Ausgangspol C zu verbinden, kann je nach Betriebszustand des Netzteils 1 entweder die Summe der an der Haupt-Sekundärwicklung $L_{2H}$ und der zumindest einen Hilfs-Sekundärwicklung $L_{2N1}$ abfallenden Spannungen an den Netzteil-Ausgangspol C ausgegeben werden, oder es kann nur die an der Haupt-Sekundärwicklung $L_{2H}$ abfallende Spannung ausgegeben werden, oder es kann eine Spannung zwischen diesen Werten ausgegeben werden. Auf diese Weise kann gezielt ausgewählt werden, wann es zu einer Spannungserhöhung kommen soll, z.B. im Leerlauf, und wann nicht, z.B. während des Schweißens. Wie die Schaltmittelt $SM_1$, $SM_2$ ausgestaltet sein können, um eine derartige betriebszustandsselektive Ausgabe der an den Wicklungen $L_{2H}$ und $L_{2N1}$ abfallenden Spannungen zu ermöglichen, wird an späterer Stelle anhand von Fig.4 erläutert. Die Erfindung bietet in diesem Zusammenhang große Flexibilität, sodass insbesondere auch Spannungen zwischen den an den Wicklungen abfallenden Teilspannungen und der Summenspannungen ausgegeben werden können. Die zwischen dem ersten Netzteil-Ausgangspol C und dem zweiten Netzteil-Ausgangspol D angeordnete Diode ist im Rahmen der in Fig.2 gezeigten Ausführung mit lediglich einer Hilfs-Sekundärwicklung $L_{2N1}$ vorteilhaft, aber keinesfalls zwingend für die Erfindung, wie beispielsweise anhand der nachfolgenden Figuren 3 und 4 erläutert wird.

Der genannte Betriebszustand kann sich auf unterschiedliche Weise in unterschiedlichen Parametern und/oder Messgrößen äußern, sodass verschiedene Parameter und/oder Messgrößen als einen Betriebszustand des Schaltnetzteils 1 repräsentierende Größen herangezogen werden können. Beispielsweise kann vorgesehen sein, den ersten Fügespannungspfad P1 zu aktivieren und den zweiten Fügespannungspfad P2 zu deaktivieren oder zu begrenzen, wenn ein über den ersten Netzteil-Ausgangspol C fließender Ausgangstrom Is einen vorgegebenen Schwellwert Ix überschreitet, oder beide Fügespannungspfade P1 und P2 zu aktivieren, wenn der über den ersten Netzteil-Ausgangspol C fließende Ausgangstrom I den vorgegebenen Schwellwert Ix unterschreitet.

Ein wichtiger Aspekt der gegenständlichen Erfindung ist die Verwendung eines Transformators T mit einem magnetischen Kern mit mehr als zwei Schenkeln. Bevorzugt wird wie gezeigt ein dreischenkeliger magnetischer Kern für den Transformator T eingesetzt, grundsätzlich ist aber auch ein Kern mit mehr als drei Schenkeln denkbar, d.h. ein vier- oder fünfoder sechsschenkeliger Kern usw. Durch die Verwendung von mehr als zwei Schenkeln wird erreicht, dass nicht sämtliche Wicklungen, d.h. im gegenständlichen Fall die Primärwicklung $L_1$, die Haupt-Sekundärwicklung $L_{2H}$ und die zumindest eine Hilfs-Sekundärwicklung $L_{2N1}$, vom gleichen magnetischen Fluss durchsetzt sind. Wie aus der Elektrotechnik hinlänglich bekannt ist, ergibt sich eine in einer Wicklung induzierte elektrische Spannung durch die zeitliche Ableitung des die Wicklung durchsetzenden magnetischen Flusses mal der Windungszahl N der Wicklung, d.h.

$$u_{ind} = -N\frac{d}{dt}\Phi.$$

Durch die Verwendung mehrerer Schenkel kann gezielt festgelegt werden, wie groß der die zumindest eine Hilfs-Sekundärwicklung $L_{2N1}$ durchsetzende Fluss und damit die induzierte Spannung ist, die letztlich zur Spannungserhöhung am Ausgang des Schaltnetzteils 1 herangezogen werden kann. Auf diese Weise entsteht eine Eingriffsmöglichkeit zur Festlegung der Spannungserhöhung, die im Betrieb, wie beschrieben, betriebszustandsabhängig ausgegeben werden kann oder nicht. Aus dem Stand der Technik ist bislang lediglich bekannt, die Windungszahlen zusätzlicher Wicklungen zu variieren, was insbesondere in Situationen mit Windungszahlen auf der Sekundärseite gleich 1 problematisch sein kann. Wird konkret eine Haupt-Sekundärwicklung $L_{2H}$ mit einer Windungszahl von 1 verwendet, was in der Schweißtechnik aus konstruktiven Gründen vielfach üblich ist, führt die Hinzugabe einer weiteren sekundärseitigen Wicklung, die mit der Haupt-Sekundärwicklung $L_{2H}$ seriell verschaltet ist, bei einem lediglich zweischenkelig ausgeführten Transformator zwingend zu einer Spannungserhöhung um den Faktor 2 oder mehr. Eine Spannungserhöhung um Faktoren zwischen 1 und 2 ist so nicht möglich.

Konkret kann im Rahmen der Erfindung weiters vorgesehen sein, dass jeder Nebenschenkel $S_{Nx}$ des Transformators T einen Querschnitt $Q_{Nx}$ aufweist und jener Nebenschenkel $S_{N1}$, um den die Hilfs-Sekundärwicklung $L_{2N1}$ gewickelt ist, einen Nebenschenkel-Querschnitt $Q_{N1}$ aufweist, sodass der Querschnitt des Nebenschenkels $Q_{N1}$ einem Anteil der Summe der Nebenschenkel-Querschnitte $\Sigma Q_{Nx}$ enspricht. Daraus ergibt sich ein Spannungs-Erhöhungsfaktor $k = 1 + (Q_{N1}/\Sigma Q_{Nx})$. Der vorgegebene Spannungs-Erhöhungsfaktor k kann in einer besonders vorteilhaften Weise einem Faktor größer als 1 aber kleiner als 2, oder einem Faktor größer als 1 aber kleiner als 1,75, oder einem Faktor größer als 1 aber kleiner als 1,6, sowie besonders bevorzugt einem Faktor von 1,5 entsprechen. Der Spannungs-Erhöhungsfaktor k entspricht jenem Faktor, um den die Fügespannung bei erfindungsgemäßer Verwendung einer Hilfs-Sekundärwicklung $L_{2N1}$ im Leerlauf vergrößert wird, wenn die Windungszahlen der sekundärseitigen Wicklungen gleich 1 sind. Das bedeutet, die Summe der an der Haupt-Sekundärwicklung $L_{2H}$ abfallenden Spannung und der an der zumindest einen Hilfs-Sekundärwicklung $L_{2N1}$ abfallenden Spannung ist um den Faktor k größer als die an der Haupt-Sekundärwicklung $L_{2H}$ abfallenden Spannung alleine.

Bei einer Wahl des Faktors k von 1,5 kann, bei Windungszahlen von 1 auf der Sekundärseite, insbesondere die eingangs beschriebene Spannungserhöhung von zum Schweißen üblichen 60V DC auf eine zum Zünden gewünschte Leerlaufspannung umgesetzt werden und trotzdem garantiert werden, dass die maximal zulässigen 113V nicht überschritten werden.

Obwohl es sich bei der Verwendung lediglich einer sekundärseitigen Hilfs-Sekundärwicklung $L_{2N1}$ sowie eines Nebenschenkels $SN_2$, um den keine Wicklung gewickelt ist, um eine bevorzugte Ausgestaltung der gegenständlichen Erfindung handelt, ist es im Rahmen der Erfindung ebenso denkbar, dass auch zwei oder mehr Hilfs-Sekundärwicklungen $L_{2N1}$, $L_{2N2}$ eingesetzt werden, und dass sämtliche Nebenschenkel eine Wicklung aufweisen. Eine derartige Ausführungsform wird nachfolgend anhand von Fig.3 diskutiert.

Fig.3 zeigt ein Netzteil 1 im Sinne der Erfindung, bei dem im Unterschied zur Ausführung gemäß Fig.2 die Haupt-Sekundärwicklung $L_{2H}$ als Haupt-Sekundärwicklung $L_{2H}$ mit Mittelpunktanzapfung ausgeführt ist. Das in Fig.3 gezeigte Netzteil 1 weist neben dem ersten Haupt-Wicklungsanschluss 21 und dem zweiten Haupt-Wicklungsanschluss 22 einen dritten Haupt-Wicklungsanschluss 25 auf, wobei der zweite Haupt-Wicklungsanschluss 22 der Mittelpunktanzapfung entspricht. Weiters ist eine zweite, um einen zweiten der zumindest zwei Nebenschenkel $S_{N2}$ gewickelte Hilfs-Sekundärwicklung $L_{2N2}$ mit einem dritten Hilfs-Wicklungsanschluss 26 und einem vierten Hilfs-Wicklungsanschluss 27 vorgesehen.

Um das erfindungsgemäße Konzept einer betriebszustandsabhängigen Ausgabe verschiedener sekundärseitiger Spannungen an einem mehrschenkeligen Transformatorkern auf die Ausführung gemäß Fig.3 zu übertragen, ist der dritte Haupt-Wicklungsanschluss 25 über ein drittes elektrisches Schaltmittel $SM_3$ mit dem ersten Netzteil-Ausgangspol C verbunden, um einen dritten Fügespannungspfad $P_3$ zwischen dem dritten Haupt-Wicklungsanschluss 25 und dem ersten Netzteil-Ausgangspol C zu erzeugen. Der dritte Hilfs-Wicklungsanschluss 26 ist weiters elektrisch leitend mit dem dritten Haupt-Wicklungsanschluss 25 verbunden, und der vierte Hilfs-Wicklungsanschluss 27 ist über ein viertes elektrisches Schaltmittel $SM_4$ mit dem ersten Netzteil-Ausgangspol C verbunden, um einen vierten, zum dritten Fügespannungspfad P3 parallelen Fügespannungspfad P4 zwischen dem dritten Haupt-Wicklungsanschluss und dem ersten Netzteil-Ausgangspol C zu erzeugen. Wie das erste und zweite Schaltmittel $SM_1$, $SM_2$ sind im in Fig.3 gezeigten Fall zusätzlich auch das dritte Schaltmittel $SM_3$ und das vierte Schaltmittel $SM_4$ ausgestaltet, in Abhängigkeit des vorstehen beschriebenen Betriebszustandes des Netzteils 1 entweder den zweiten oder den vierten Fügespannungspfad $P_2$, $P_4$ in einen elektrisch leitenden Zustand zu versetzen und damit zu aktivieren, zusätzlich zum ersten oder dritten Fügespannungspfad $P_1$, $P_3$. Die Verwendung einer weiteren Hilfs-Sekundärwicklung $L_{2N2}$ erlaubt die Bereitstellung eines energieeffizienteren Schaltnetzteils 1, da insbesondere auf die in Fig.3 gezeigte Weise der gesamte im Transformator T auftretende magnetische Fluss genutzt werden kann. Bevorzugt sind stets der erste und zweite Fügespannungspfad $P_1$, $P_2$ gleichzeitig leitend oder nicht-leitend, und es sind stets der dritte und vierte Fügespannungspfad $P_3$, $P_4$ gleichzeitig leitend oder nicht-leitend.

In einer bevorzugten Weise kann die Haupt-Sekundärwicklung $L_{2H}$ in der Ausführung gemäß Fig.3 zwischen dem ersten Haupt-Wicklungsanschluss 21 und der Mittelpunktanzapfung 22 eine erste Teilwicklung mit Windungszahl 1 aufweisen und zwischen der Mittelpunktanzapfung 22 und dem zweiten Haupt-Wicklungsanschluss 25 eine zweite Teilwicklung mit Windungszahl 1 aufweisen, um, wie zuvor, auch in dieser Ausführungsform auf die bei Netzteilen 1 übliche, sekundärseitige Windungszahl von 1 zurückzugreifen.

Wie die genannten Schaltmittel $SM_1$, $SM_2$, $SM_3$, $SM_4$ umgesetzt werden können, ist in Fig.4 gezeigt, anhand einer konkreten Implementierung des Netzteils 1 aus Fig.3. Wie in Fig.4 erkennbar ist, können das erste elektrische Schaltmittel $SM_1$ und das dritte elektrische Schaltmittel $SM_3$ in einer vorteilhaften Weise als Diode ausgeführt sein, und/oder das zweite elektrische Schaltmittel $SM_2$ und das elektrische Schaltmittel $SM_4$ kann als Serienschaltung eines Strombegrenzungsmittels $L_{R1}$ bzw. $L_{R2}$ und einer Diode ausgeführt sein. Anstelle der gezeigten Dioden können aber ebenso steuerbare Halbleiterschalter eingesetzt werden, die je nach Betriebszustand des Schaltnetzteils 1 geschlossen oder geöffnet werden können. Die Strombegrenzungsmittel $L_{R1}$, $L_{R2}$ können in einer bevorzugten Weise als Strombegrenzungsdrossel oder als Luftspule ausgeführt werden. Gerade die Verwendung von steuerbaren Halbleiterschaltern ermöglicht eine gezielte Aktivierung / Deaktivierung von Fügespannungspfaden. In den Fügespannungspfaden können auch veränderliche ohmsche Widerstände vorgesehen werden, z.B. elektronische Potentiometer, oder Thyristoren, um eine präzise Begrenzung ausgewählter Fügespannungspfade umsetzen zu können.

Zu der in Fig.4 gezeigten Ausgestaltung der Schaltmittel mit rein passiven Bauelementen ist anzumerken, dass sich das betriebszustandsselektive Aktivieren der Spannungspfade ganz von selbst ergibt. Bei Betriebspunkten mit geringer Last, d.h. insbesondere im Leerlauf, wo kein Strom fließt, ist die Impedanz der als Drossel ausgeführten Strombegrenzungsmittel $L_R$ vernachlässigbar. Das bedeutet, die Summe der Spannungen an Haupt-Sekundärwicklung $L_{2H}$ und Hilfs-Sekundärwicklung $L_{2N1}$ liegt am ersten Netzteil-Ausgangspol C an, sodass die Diode SM1 des ersten Schaltmittels $S_{M1}$ sperrt. Gleiches gilt für die zweite Hilfs-Sekundärwicklung $L_{2N2}$ und Schaltmittel SM2. Steigt der fließende Strom Is, vergrößert sich der Spannungsabfall über die Impedanz des als Drossel ausgeführten Strombegrenzungsmittel $L_R$, sodass das am ersten Netzteil-Ausgangspol C anliegende Potential bei ausreichend großer Belastung auf jenes Potential des ersten Haupt-Wicklungsanschlusses 21 zu liegen kommt. Das hat zur Folge, dass der durch das zweite Schaltmittel SM2 und damit den zweiten Fügespannungspfad $P_2$ fließende Strom auf einen Wert $I_2$=Ix begrenzt wird und das este Schaltmittel SM1 einen Strom $I_1$=Is-Ix übernimmt, der gemeinsam mit dem Strom $I_2$ des zweiten Fügespannungspfades $P_2$ dem Fügestrom entspricht. Bei der Ausführung nach Fig.4 stellt sich von selbst ein dynamisches Gleichgewicht ein. Würde der Strom $I_2$ weiter sinken, würde die effektive Impedanz der Strombegrenzungsdrosseln $L_{R1}$ sinken, was ein erneutes Erhöhen der des Stromes zur Folge hätte. Es ist folglich ein besonderer Vorteil der Erfindung, dass bei der Ausführung gemäß Fig.4 nicht einmal eine Steuereinheit vonnöten ist. Das Verhalten wird lediglich durch die Dimensionierung der Bauteile bestimmt.

Auch ist anzumerken, dass die gezeigten Strombegrenzungsdrosseln $L_{R1}$, $L_{R2}$ auch als zwei Wicklungen eines weiteren Transformators ausgeführt sein können, und dass ebenso der zweite Haupt-Wicklungsanschluss 22 auf verschiedene Weisen mit dem zweiten Netzteil-Ausgangspol D verbunden sein kann, z.B. durch eine direkte, elektrisch leitende Verbindung mit einem einfachen elektrischen Leiter, oder wie in Fig.4 gezeigt mittels einer Drossel. Die Schaltmittel $SM_1$, ..., $SM_4$ übernehmen in den gezeigten Ausführungsvarianten die Funktion eines sekundärseitigen Gleichrichters $G_2$.

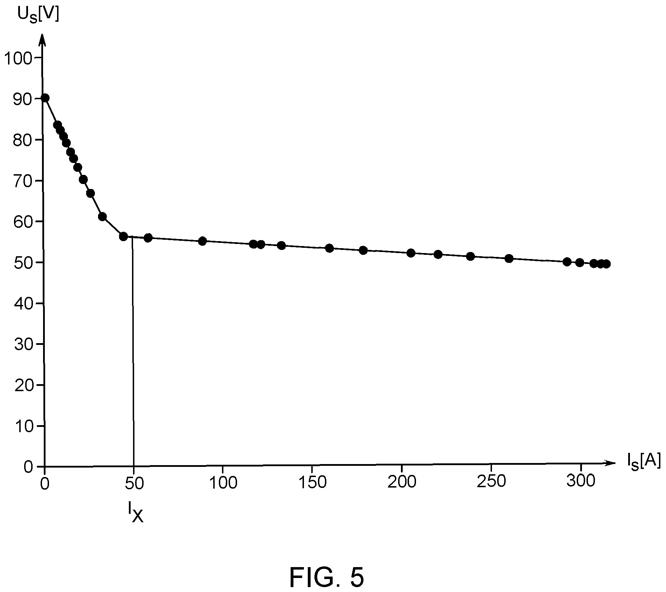

Fig.5 zeigt abschließend eine mit einem erfindungsgemäßen Netzteil 1 nach Fig.4 erreichbare Strom-Spannungs-Kennlinie. Es ist erkennbar, dass die Strombegrenzungsdrosseln $L_{R1}$, $L_{R2}$ konstruktiv derart gewählt sind, dass ab einem Fügestrom von Ix=50A die zusätzliche Wirkung der Hilfs-Sekundärwicklung einbricht, und sich die Fügespannung $U_S$ auf jenen Wert einstellt, der sich auch ohne Hilfs-Sekundärwicklung ergeben würde.

**Patentansprüche**

1. Netzteil (1) zur Bereitstellung einer zwischen einem ersten Netzteil-Ausgangspol (C) und einem zweiten Netzteil-Ausgangspol (D) abfallenden Fügespannung ($U_S$) für die Durchführung eines Lichtbogenfügeverfahrens, **dadurch gekennzeichnet, dass** ein Transformator (T) mit einem zumindest dreischenkeligen magnetischen Kern vorgesehen ist, aufweisend einen Hauptschenkel ($S_H$), zumindest zwei Nebenschenkel ($S_{N1}$, $S_{N2}$), eine Primärwicklung (L1) zur Aufnahme einer an einem Netzteil-Eingangspolpaar (A, B) des Netzteils (1) anliegenden Primär-Wechselspannung ($U_1$), eine Haupt-Sekundärwicklung ($L_{2H}$) mit einem ersten Haupt-Wicklungsanschluss (21) und einem zweiten Haupt-Wicklungsanschluss (22), und zumindest eine Hilfs-Sekundärwicklung ($L_{2N1}$) mit einem ersten Hilfs-Wicklungsanschluss (23) und einem zweiten Hilfs-Wicklungsanschluss (24), wobei die Primärwicklung ($L_1$) und die Haupt-Sekundärwicklung ($L_{2H}$) um den Hauptschenkel ($S_H$) gewickelt sind und die zumindest eine Hilfs-Sekundärwicklung ($L_{2N1}$) um einen der zumindest zwei Nebenschenkel ($S_{N1}$) gewickelt ist, wobei

- der erste Haupt-Wicklungsanschluss (21) über ein erstes elektrisches Schaltmittel ($SM_1$) mit dem ersten Netzteil-Ausgangspol (C) elektrisch verbunden ist, um einen ersten Fügespannungspfad ($P_1$) zwischen dem ersten Haupt-Wicklungsanschluss (21) und dem ersten Netzteil-Ausgangspol (C) zu erzeugen,
- der zweite Haupt-Wicklungsanschluss (22) mit dem zweiten Netzteil-Ausgangspol (D) elektrisch verbunden ist,
- der erste Hilfs-Wicklungsanschluss (23) über ein zweites elektrisches Schaltmittel ($SM_2$) mit dem ersten Netzteil-Ausgangspol (C) verbunden ist, und der zweite Hilfs-Wicklungsanschluss (24) elektrisch leitend mit dem ersten Haupt-Wicklungsanschluss (21) verbunden ist, um einen zweiten, zum ersten Fügespannungspfad ($P_1$) parallelen Fügespannungspfad ($P_2$) zwischen dem ersten Haupt-Wicklungsanschluss (21) und dem ersten Netzteil-Ausgangspol (C) zu erzeugen,

wobei das erste Schaltmittel ($SM_1$) und das zweite Schaltmittel ($SM_2$) ausgestaltet sind, in Abhängigkeit eines Betriebszustandes des Netzteils (1) den ersten Fügespannungspfad ($P_1$) oder den zweiten Fügespannungspfad ($P_2$) oder gleichzeitig den ersten Fügespannungspfad ($P_1$) und den zweiten Fügespannungspfad ($P_2$) in einen elektrisch leitenden Zustand zu versetzen und damit zu aktivieren, um die von der Primärwicklung ($L_1$) aufgenommene Primär-Wechselspannung ($U_1$) in die Fügespannung ($U_S$) zu wandeln.

2. Netzteil (1) nach Anspruch 1, **dadurch gekennzeichnet, dass** das erste Schaltmittel ($SM_1$) und das zweite Schaltmittel ($SM_2$) ausgestaltet sind, den ersten Fügespannungspfad (P1) zu aktivieren, und/oder den zweiten Fügespannungspfad (P2) zu deaktivieren oder zu begrenzen, wenn ein über den ersten Netzteil-Ausgangspol (C) fließender Ausgangstrom (Is) einen vorgegebenen Schwellwert (Ix) überschreitet, **und dass** das erste Schaltmittel (SM$_1$) und das zweite Schaltmittel (SM$_1$) ausgestaltet sind, den ersten Fügespannungspfad (P$_1$) zu aktivieren und/oder den zweiten Fügespannungspfad (P$_2$) zu aktivieren, wenn der über den ersten Netzteil-Ausgangspol (C) fließende Ausgangstrom (Is) den vorgegebenen Schwellwert (I$_x$) unterschreitet.

3. Netzteil (1) nach einem der vorhergehenden Ansprüche, **dadurch gekennzeichnet, dass** das erste elektrische Schaltmittel (SM$_1$) als Diode oder als steuerbarer Halbleiterschalter, beispielsweise als Transistor oder Thyristor, ausgeführt ist.

4. Netzteil (1) nach einem der vorhergehenden Ansprüche, **dadurch gekennzeichnet, dass** das zweite elektrische Schaltmittel (SM$_2$) als Serienschaltung eines Strombegrenzungsmittels (L$_{R1}$) und einer Diode oder als steuerbarer Halbleiterschalter ausgeführt ist.

5. Netzteil (1) nach Anspruch 4, **dadurch gekennzeichnet, dass** das Strombegrenzungsmittel (L$_{R1}$) als Strombegrenzungsdrossel oder als Luftspule ausgeführt ist.

6. Netzteil (1) nach einem der vorhergehenden Ansprüche, **dadurch gekennzeichnet, dass** jener zumindest eine Nebenschenkel (S$_{N1}$), um den die zumindest eine Hilfs-Sekundärwicklung (L$_{2N1}$) gewickelt ist, einen Nebenschenkel-Querschnitt (Q$_{N1}$) aufweist, **und dass** das Verhältnis dieses Nebenschenkel-Querschnitts (Q$_{N1}$) zu einer Summe von Querschnitten von im Transformator (T) vorgesehenen Nebenschenkeln einen Spannungs-Erhöhungsfaktor k = 1+(Q$_{N1}$/ΣQ$_{Nx}$) beschreibt.

7. Netzteil (1) nach Anspruch 6, **dadurch gekennzeichnet, dass** der Spannungs-Erhöhungsfaktor k einem Faktor größer als 1 und kleiner als 2, vorzugsweise größer als 1 und kleiner als 1,75, vorzugsweise größer als 1 und kleiner als 1,6, vorzugsweise 1,5 entspricht.

8. Netzteil (1) nach einem der vorhergehenden Ansprüche, **dadurch gekennzeichnet, dass** die Haupt-Sekundärwicklung (L$_{2H}$) eine Windungszahl von 1 aufweist.

9. Netzteil (1) nach einem der vorhergehenden Ansprüche, **dadurch gekennzeichnet, dass** die Hilfs-Sekundärwicklung (L$_{2N1}$) eine Windungszahl von 1 aufweist.

10. Netzteil (1) nach einem der vorhergehenden Ansprüche, **dadurch gekennzeichnet, dass** die Primärwicklung (L$_1$) eine Windungszahl von 2 oder höher aufweist.

11. Netzteil (1) nach einem der vorhergehenden Ansprüche, **dadurch gekennzeichnet, dass** die Haupt-Sekundärwicklung (L$_{2H}$) als Wicklung mit Mittelpunktanzapfung oder als Serienschaltung von zwei Wicklungen ausgeführt ist, neben dem ersten Haupt-Wicklungsanschluss (21) und dem zweiten Haupt-Wicklungsanschluss (22) aufweisend einen dritten Haupt-Wicklungsanschluss (25), wobei der zweite Haupt-Wicklungsanschluss (22) der Mittelpunktanzapfung entspricht und wobei eine zweite, um einen zweiten der zumindest zwei Nebenschenkel (S$_{N2}$) gewickelte Hilfs-Sekundärwicklung (L$_{2N2}$) mit einem dritten Hilfs-Wicklungsanschluss (26) und einem vierten Hilfs-Wicklungsanschluss (27) vorgesehen ist, wobei

- der dritte Haupt-Wicklungsanschluss (25) über ein drittes elektrisches Schaltmittel (SM$_3$) mit dem ersten Netzteil-Ausgangspol (C) verbunden ist, um einen dritten Fügespannungspfad (P3) zwischen dem dritten Haupt-Wicklungsanschluss (25) und dem ersten Netzteil-Ausgangspol (C) zu erzeugen,
- der dritte Hilfs-Wicklungsanschluss (26) elektrisch leitend mit dem dritten Haupt-Wicklungsanschluss (25) verbunden ist und der vierte Hilfs-Wicklungsanschluss (27) über ein viertes elektrisches Schaltmittel (SM$_4$) mit dem ersten Netzteil-Ausgangspol (C) verbunden ist, um einen vierten, zum dritten Fügespannungspfad (P3) parallelen Fügespannungspfad (P4) zwischen dem dritten Haupt-Wicklungsanschluss (26) und dem ersten Netzteil-Ausgangspol (C) zu erzeugen,
- das dritte Schaltmittel (SM$_3$) und das vierte Schaltmittel (SM$_4$) ausgestaltet sind, in Abhängigkeit des Betriebszustandes des Netzteils (1) entweder den dritten und/oder den vierten Fügespannungspfad (P$_3$, P$_4$) in einen elektrisch leitenden Zustand zu versetzen und damit zu aktivieren.

12. Netzteil (1) nach Anspruch 11, **dadurch gekennzeichnet, dass** die die Haupt-Sekundärwicklung (L$_{2H}$) zwischen dem ersten Haupt-Wicklungsanschluss (21) und der Mittelpunktanzapfung (22) eine erste Teilwicklung mit Windungszahl 1 aufweist und zwischen der Mittelpunktanzapfung (22) und dem zweiten Haupt-Wicklungsanschluss (25) eine zweite Teilwicklung mit Windungszahl 1 aufweist.

13. Netzteil (1) nach einem der vorhergehenden Ansprüche, **dadurch gekennzeichnet, dass** zumindest ein Nebenschenkel (SN1, SN2) des Transformators vorgesehen ist, um den keine Wicklung gewickelt ist.

14. Anordnung aus einem Netzteil (1) nach einem der vorhergehenden Ansprüche, einem primärseitigen Gleichrichter (G1) zum Gleichrichten einer elektrischen Netzspannung ($U_N$) in eine primärseitige Zwischenkreisspannung ($U_{ZK}$) und einem mit einer vorgegebenen Schaltfrequenz betriebenen, primärseitigen Wechselrichter (WR) zum Wechselrichten der Zwischenkreisspannung ($U_{ZK}$) in die am Netzteil-Eingangspolpaar (A, B) anliegende Primär-Wechselspannung ($U_1$).

FIG. 1

FIG. 2

FIG. 3

FIG. 4

FIG. 5

Europäisches
Patentamt

European
Patent Office

Office européen
des brevets

## EUROPÄISCHER RECHERCHENBERICHT

Nummer der Anmeldung

EP 24 15 6861

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | YA NOVIKOV O ET AL: "A NON-LINEAR POWER SOURCE FOR WELDING ARCS", AUTOMATIC WELDING,, Bd. 24, Nr. 11, 1. November 1971 (1971-11-01), Seiten 46-49, XP001341641, | 1-4, 6-10,13, 14 | INV. H02M1/00 H02M5/12 H02M7/10 B23K9/06 |
| A | * Abbildungen 1,2,3 * <br> * Seite 46 - Seite 49 * <br> - - - - - | 5,11,12 | ADD. H02M7/19 H02M7/25 |
| Y | SU 1 480 991 A1 (LE ZAVOD ELEKTRIK [SU]) 23. Mai 1989 (1989-05-23) | 1-4, 6-10,13, 14 | |
| A | * Maschinenübersetzung; Abbildungen 1,2 * <br> - - - - - | 5,11,12 | |
| Y | DE 27 23 767 A1 (MESSER GRIESHEIM GMBH) 30. November 1978 (1978-11-30) | 1-4, 6-10,13, 14 | |
| A | * Abbildungen 1-4 * <br> - - - - - | 5,11,12 | |
| A | AT 403 260 B (FRONIUS SCHWEISSMASCH [AT]) 29. Dezember 1997 (1997-12-29) * Abbildungen 1-6 * <br> - - - - - | 1-14 | RECHERCHIERTE SACHGEBIETE (IPC) <br><br> H02M B23K H01F |

Der vorliegende Recherchenbericht wurde für alle Patentansprüche erstellt

| Recherchenort | Abschlußdatum der Recherche | Prüfer |
|---|---|---|
| Den Haag | 4. Juli 2024 | Kail, Maximilian |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

......................................................................................

& : Mitglied der gleichen Patentfamilie, übereinstimmendes
Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**          EP 24 15 6861

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-07-2024

| Im Recherchenbericht angeführtes Patentdokument | Datum der Veröffentlichung | Mitglied(er) der Patentfamilie | Datum der Veröffentlichung |
|---|---|---|---|
| SU 1480991 A1 | 23-05-1989 | KEINE | |
| DE 2723767 A1 | 30-11-1978 | KEINE | |
| AT 403260 B | 29-12-1997 | AT 403260 B | 29-12-1997 |
| | | DE 19612319 A1 | 31-10-1996 |

**IN DER BESCHREIBUNG AUFGEFÜHRTE DOKUMENTE**

**In der Beschreibung aufgeführte Patentdokumente**

- US 2004119572 A1

- EP 3376659 A1